# EUROPEAN PATENT APPLICATION

(11) **EP 4 756 294 A1**
(43) Date of publication of application: **10.06.2026**
(21) Application number: 25220121.5
(22) Date of filing: 02.12.2025
(51) Int. Cl.: F24C 7/08, A47L 15/42, D06F 34/30, G05G 1/10, H01H 19/02

(54) **HOME APPLIANCE**

(30) Priority: 03.12.2024 KR 20240177677
(71) Applicant: LG Electronics Inc., Yeongdeungpo-gu Seoul 07336 (KR)
(72) Inventor: KWON, Soonil, Seoul 07796 (KR); JANG, Jaebong, Seoul 07796 (KR); KIM, Jaewoong, Seoul 07796 (KR); CHOI, Jinseok, Seoul 07796 (KR); KIM, Gyeongho, Seoul 07796 (KR); DO, Hong Seung, Seoul 07796 (KR); JUNG, Kyongho, Seoul 07796 (KR)
(74) Representative: Vossius & Partner Patentanwälte Rechtsanwälte mbB

(57) **Abstract**

Disclosed herein is a home appliance. The home appliance comprises a first light diffusion guide arranged between a panel and a knob, and a second light diffusion guide arranged between the knob and the first light diffusion guide and configured to transmit light incident from the first light diffusion guide to an inside region of the knob, wherein the first light diffusion guide is configured to implement lighting by emitting, in a region between the panel and the second light diffusion guide, a portion of light incident to the first light diffusion guide, and the second light diffusion guide is configured to implement lighting by emitting, in a region between the first light diffusion guide and the knob, a portion of light incident to the second light diffusion guide.

## Description

The present disclosure relates to a home appliance, and in particular, to a home appliance including an operation device configured to be rotatably operated.

Home appliances such as cooking appliances, washing machines, dryers, and dishwashers, which are configured to control operations through various switches, are widely used. For example, various switches may be provided in a cooking appliance to control a cooking mode, heating intensity, and heating time, and various switches may be provided in a washing machine to select a washing mode or adjust a washing time. Such switches may be classified into push switches, slide switches, and rotary switches according to an operation manner.

In selecting a cooking mode or adjusting a heating intensity of a cooking appliance, rotary switches have been traditionally and widely used. A knob is typically used as a representative example of such a rotary switch. The knob is provided in a form rotatable about a predetermined rotation axis, and a user may select the cooking mode of the cooking appliance or adjust the heating intensity by controlling a rotation amount of the knob.

Typically, the knob includes a knob body forming an exterior appearance of the knob and a coupling structure formed inside the knob body and coupled to a rotation shaft of a valve. In addition, lighting may be applied to the knob. The lighting applied to the knob may be provided to illuminate the knob itself or to illuminate letters, symbols, and the like displayed on the knob, and may also be provided in a form of mood lighting that illuminates surroundings of the knob.

One objective of the present disclosure is to provide a home appliance capable of implementing lighting at various positions of an operation device while suppressing a cost increase.

Another objective of the present disclosure is to provide a home appliance capable of enhancing an appearance of the home appliance and improving an identification of information provided by the operation device.

Still another objective of the present disclosure is to provide a home appliance having an improved structure capable of reducing a cost and time required for assembling the operation device.

The present invention is defined by independent claim 1; the dependent claims describe embodiments of the present invention. A home appliance according to one embodiment of the present disclosure for achieving the above objectives includes a first light diffusion guide arranged between a panel and a knob, a light source configured to emit light toward the first light diffusion guide, and a second light diffusion guide arranged between the knob and the first light diffusion guide and configured to transmit light incident from the first light diffusion guide to an inside region of the knob, and is characterized in that the first light diffusion guide is configured to implement lighting by emitting a portion of the light incident to the first light diffusion guide in a region between the panel and the second light diffusion guide, and the second light diffusion guide is configured to implement lighting by emitting a portion of the light incident to the second light diffusion guide in a region between the first light diffusion guide and the knob.

Another embodiment of the present disclosure includes a first light diffusion guide arranged between a panel and a knob, a light source configured to emit light toward the first light diffusion guide, and a second light diffusion guide arranged between the knob and the first light diffusion guide and configured to transmit light incident from the first light diffusion guide to an inside region of the knob, and is characterized in that the first light diffusion guide is configured to implement lighting by emitting a portion of the light incident to the first light diffusion guide in a region between the panel and the second light diffusion guide, and the second light diffusion guide is configured to implement lighting at a plurality of points by emitting a portion of the light incident to the second light diffusion guide in each of a portion of the second light diffusion guide exposed outward of the knob and a region between the first light diffusion guide and the knob.

Another embodiment of the present disclosure is characterized in that a first light diffusion guide arranged between a panel and a knob and a light source configured to emit light toward the first light diffusion guide are installed on a base member, and the base member is installed on the panel.

A home appliance according to one aspect of the present disclosure may include a knob rotatably provided with respect to a panel; a first light diffusion guide arranged between the panel and the knob and installed on the panel; a light source configured to emit light toward the first light diffusion guide; and a second light diffusion guide of which at least a portion is arranged between the knob and the first light diffusion guide and configured to transmit light incident from the first light diffusion guide to an inside region of the knob.

The first light diffusion guide may include a light transmission portion configured to transmit light received from the light source to the second light diffusion guide, and an edge lighting portion configured to implement lighting by emitting a portion of the light incident to the light transmission portion in a region between the panel and the second light diffusion guide.

Preferably, the second light diffusion guide may implement lighting by emitting a portion of the light incident to the second light diffusion guide in a region between the first light diffusion guide and the knob.

It is also preferable that the edge lighting portion implements lighting at an outer side in a diametrical direction of the knob and the second light diffusion guide.

The light transmission portion is preferably formed in a shape including a surface orthogonal to an axial direction.

It is also preferable that the edge lighting portion protrudes in the axial direction from an outer edge of the light transmission portion.

It is also preferable that the light transmission portion and the edge lighting portion are connected in a diametrical direction.

It is also preferable that the light transmission portion is arranged at a position covered by the second light diffusion guide between the panel and the second light diffusion guide.

It is also preferable that at least a portion of the edge lighting portion is arranged in a region not covered by the second light diffusion guide between the panel and the second light diffusion guide.

It is also preferable that at least a portion of the edge lighting portion protrudes so as to cover a gap between the panel and the knob from an outer side in a diametrical direction.

The second light diffusion guide may include a first guide portion and a second guide portion.

With respect to an axial direction, it is also preferable that the first guide portion is arranged between the first light diffusion guide and the second guide portion.

It is also preferable that at least a portion of the first guide portion and the second guide portion is arranged to face at least a portion of the first light diffusion guide in the axial direction so as to receive light emitted from the first light diffusion guide.

The present disclosure may further include an inner member arranged between an inner surface of the first guide portion facing the light transmission portion and the light transmission portion.

The inner member may include a light-shielding portion configured to block light transmission between the light transmission portion and the first guide portion, and a light-transmitting portion configured to allow light transmission between the light transmission portion and the first guide portion.

It is also preferable that light emitted from the light source or the light transmission portion is transmitted to the first guide portion through the light-transmitting portion.

It is also preferable that the light-shielding portion is formed as a result of a light-shielding material being coated on an inner surface of the first guide portion.

It is also preferable that the light-transmitting portion is formed as a result of a portion of the light-shielding material coated on the inner surface of the first guide portion being removed from the first guide portion.

The present disclosure may further include an outer member arranged to be spaced apart from the inner member with the first guide portion interposed therebetween.

It is also preferable that a light transmittance of the outer member is higher than a light transmittance of the light-shielding portion and lower than a light transmittance of the first guide portion.

The first guide portion may include an inclined surface inclined in a direction between an axial direction and a diametrical direction.

It is also preferable that the light-transmitting portion is arranged on the inclined surface.

It is also preferable that the knob covers the second guide portion and is coupled to the second light diffusion guide.

It is also preferable that a through-hole is provided on a front surface of the knob, and that a portion of the second guide portion is exposed to an outside of the knob through the through-hole to implement lighting.

The second light diffusion guide may include a protrusion portion protruding from the second guide portion so as to be insertable into the through-hole.

It is also preferable that the protrusion portion is fitted into the knob through the through-hole and is exposed to an outside of the knob, and emits light delivered through the second guide portion to the outside of the knob.

It is also preferable that the knob covers the second guide portion and is coupled to the second light diffusion guide, that at least a portion of the first guide portion implements lighting between the panel and the knob, that at least a portion of the second guide portion is exposed to an outside of the knob to implement lighting, and that a position of lighting implemented by the first guide portion and a position of lighting implemented by the second guide portion are arranged to be spaced apart from each other in an axial direction.

Also, the present disclosure may further include a base member installed on the panel.

It is also preferable that at least one of the light source and the first light diffusion guide is installed on the base member.

It is also preferable that a substrate on which the light source is installed is arranged between the panel and the base member and is installed on the base member.

It is also preferable that the base member includes a base plate arranged between the light source and the light transmission portion, and a light through-hole formed in the base plate and forming a passage connecting the light source and the light transmission portion.

It is also preferable that the first light diffusion guide is arranged between the base member and the second light diffusion guide and is coupled to the base member.

The present disclosure may further include a fastening member configured to couple the base member to the panel.

The base member may also include a base plate forming a surface facing the light transmission portion.

The fastening member may also include a body portion penetrating the base plate and the panel, and a head portion connected to the body portion so as to protrude outward of the base plate.

It is also preferable that at least a portion of the head portion is inserted into an inside of the light transmission portion or passes through the light transmission portion in an axial direction.

Also, the first light diffusion guide may further include a cover portion formed by a portion of the light transmission portion being recessed in a direction away from the base plate.

It is also preferable that at least a portion of the head portion is inserted into a space surrounded by the cover portion.

It is also preferable that the cover portion is connected to the light transmission portion so that light transmission between the light transmission portion and the cover portion is possible.

The first light diffusion guide may further include a through-hole portion formed in the first light diffusion guide to form a passage for passing the fastening member in an axial direction.

It is also preferable that the knob is arranged on a front side of the panel, and that the through-hole portion is arranged below the cover portion.

With respect to an axial direction, it is also preferable that the light source is arranged between the panel and the first light diffusion guide, that the base member is arranged between the light source and the first light diffusion guide, and that the substrate on which the light source is installed and the first light diffusion guide are installed on the base member.

The present disclosure may further include a control shaft rotatably installed on an object to be adjusted.

It is also preferable that the control shaft penetrates the panel, the base member, and the first light diffusion guide in an axial direction and is coupled to the second light diffusion guide.

The base member is also preferably coupled to the panel and the object to be adjusted.

The present disclosure may further include a first fastening member configured to couple the base member to the panel, and a second fastening member configured to couple the base member to the object to be adjusted.

The first light diffusion guide may further include a through-hole portion formed in the first light diffusion guide to form a passage for passing at least one of the first fastening member and the second fastening member in an axial direction.

Also, a home appliance according to one aspect of the present disclosure may include: a knob rotatably provided with respect to a panel; a first light diffusion guide arranged between the panel and the knob and installed on the panel; a light source configured to emit light toward the first light diffusion guide; and a second light diffusion guide including a first guide portion arranged between the first light diffusion guide and the knob and a second guide portion configured to transmit light delivered from the first guide portion to an inside of the knob, wherein the first light diffusion guide may include a light transmission portion configured to transmit light received from the light source to the first guide portion and an edge lighting portion configured to implement lighting by emitting a portion of the light incident to the light transmission portion in a region between the panel and the knob.

With respect to an axial direction, it is also preferable that the first guide portion is arranged between the first light diffusion guide and the second guide portion, that the first guide portion is configured to implement lighting by emitting a portion of the light incident to the first guide portion outward in a region between the first light diffusion guide and the knob, and that the second guide portion is configured to implement lighting by emitting a portion of the light incident to the second guide portion to an outside of the knob through a portion of the second guide portion exposed to the outside of the knob.

It is also preferable that lighting implemented by the first light diffusion guide and lighting implemented by the second light diffusion guide are arranged at positions spaced apart from each other in an axial direction, and that lighting implemented by the first guide portion and lighting implemented by the second guide portion are arranged at positions spaced apart from each other in an axial direction.

Also, a home appliance according to one aspect of the present disclosure may include: a knob rotatably provided with respect to a panel; a first light diffusion guide arranged between the panel and the knob; a light source configured to emit light toward the first light diffusion guide; a base member arranged between the light source and the light diffusion guide; and a second light diffusion guide of which at least a portion is arranged between the knob and the first light diffusion guide and configured to transmit light incident from the first light diffusion guide to an inside region of the knob, wherein the light source and the first light diffusion guide may be installed on the base member, and the base member may be installed on the panel.

It is also preferable that the base member is installed on the panel while the light source is installed on the base member.

According to the home appliance of the present disclosure, an effect can be provided such that lighting is efficiently implemented at various positions of an operation device while suppressing a cost increase required for installation of the operation device, by enabling the number of lighting-implementation points to be increased without additionally installing a light source.

The present disclosure can also provide an effect by enabling lighting to be implemented at various points of the operation device, such that not only an appearance of the home appliance is improved but also information provided by the operation device, such as a current state of the operation device and a pictogram, can be provided with enhanced identification.

The present disclosure can also provide an effect by allowing assembly work of the operation device to be easily and quickly performed with only a simple operation of coupling a base member to an object to be adjusted in a state in which a substrate on which a light source is mounted is previously installed on the base member and hook-coupling a first light diffusion guide to the base member, such that cost and time required for the assembly work of the operation device are efficiently reduced.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a perspective view illustrating a home appliance according to one embodiment of the present disclosure.
FIG. 2 is a side sectional view showing an internal structure of the home appliance illustrated in FIG. 1.
FIG. 3 is a view illustrating an operation device illustrated in FIG. 1 in a separated state.
FIG. 4 is a front exploded perspective view illustrating an exploded state of an operation device according to one embodiment of the present disclosure.
FIG. 5 is a rear exploded perspective view of an operation device according to one embodiment of the present disclosure.
FIG. 6 is a sectional view showing an internal structure of an operation device according to one embodiment of the present disclosure.
FIG. 7 is an enlarged view illustrating an enlarged portion 7 of FIG. 6.
FIG. 8 is an enlarged view illustrating an enlarged portion 8 of FIG. 6.
FIG. 9 is an enlarged view illustrating an enlarged portion 9 of FIG. 8.
FIG. 10 is a sectional view taken along line 10-10 of FIG. 3.
FIG. 11 is a sectional view taken along line 11-11 of FIG. 3.
FIG. 12 is a sectional view taken along line 12-12 of FIG. 3.
FIG. 13 is a view showing a state before lighting of an operation device according to one embodiment of the present disclosure.
FIG. 14 is a view showing a lit state of an operation device according to one embodiment of the present disclosure.

### DETAILED DESCRIPTION

The above-described aspects, features and advantages are specifically described hereafter with reference to accompanying drawings such that one having ordinary skill in the art to which the disclosure pertains can embody the disclosure easily. In the disclosure, detailed description of known technologies in relation to the subject matter of the disclosure is omitted if it is deemed to make the gist of the disclosure unnecessarily vague Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

Embodiments are not limited to the embodiments set forth herein, and can be modified and changed in various different forms. The embodiments in the disclosure are provided such that the disclosure can be through and complete and fully convey its scope to one having ordinary skill in the art. Accordingly, all modifications, equivalents or replacements as well as a replacement of the configuration of any one embodiment with the configuration of another embodiment or an addition of the configuration of any one embodiment to the configuration of another embodiment, within the technical scope of the disclosure, are to be included in the scope of the disclosure.

The accompanying drawings are provided for a better understanding of the embodiments set forth herein and are not intended to limit the disclosure. It is to be understood that all the modifications, equivalents or replacements within the technical scope of the disclosure are included in the scope of the disclosure. The sizes or thicknesses of the components in the drawings are exaggerated or reduced to ensure ease of understanding and the like. However, the protection scope of the subject matter of the disclosure is not to be interpreted in a limited way.

The terms in the disclosure are used only to describe specific embodiments or examples and not intended to limit the subject matter of the disclosure. In the disclosure, singular forms include plural forms as well, unless explicitly indicated otherwise. In the disclosure, the terms "comprise", "comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as "connected" or "coupled" to another component, any one component can be directly connected or coupled to another component, but an additional component can be "interposed" between the two components or the two components can be "connected" or "coupled" by an additional component. When any one component is described as "directly connected" or "directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a home appliance stands on the floor, a direction in which a door is installed with respect to the center of the home appliance is defined as a forward direction. Accordingly, a direction toward the inside of the home appliance with the door open is defined as a rearward direction. For convenience, the forward direction and the rearward direction can be referred to as a first direction. Then the forward direction is referred to as one direction of the first direction, and the rearward direction is referred to as the other direction of the first direction.

Additionally, a gravitational direction can be defined as a downward direction, and a direction opposite to the gravitational direction can be defined as an upward direction.

Further, a horizontal direction across a front-rear direction of the home appliance, i.e., a widthwise direction of the home appliance that is seen in front of the door of the home appliance, can be referred to as a left-right direction. For convenience, the left-right direction can be referred to as a second direction. Then the right side can be referred to as one direction of the second direction, and the left side can be referred to as the other direction of the second direction.

Further, the widthwise direction of the home appliance can also be referred to as a lateral direction. Then the right side can also be referred to as one side of the lateral direction, and the left side can be referred to the other side of the lateral direction.

Additionally, an up-down direction can be referred to as a third direction. Then an upward direction can be referred to as one direction of the third direction, and a downward direction can be referred to as the other direction of the third direction.

Furthermore, the up-down direction can be referred to as a vertical direction. Then the front-rear direction and the left-right direction, i.e., the first direction and the second direction, can be referred to as the horizontal direction.

Throughout the disclosure, the terms "A and/or B" as used herein can denote A, B or A and B, and the terms "C to D" can denote C or greater and D or less, unless stated to the contrary.

### [Entire structure of home appliance]

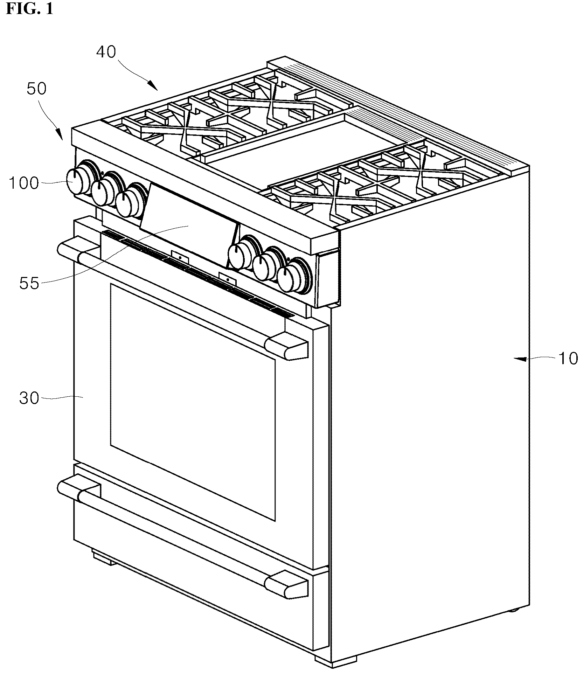

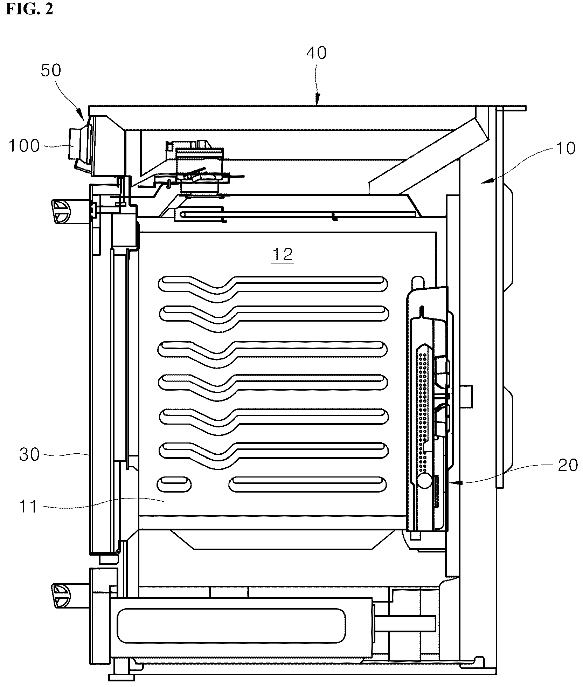

FIG. 1 is a perspective view illustrating a home appliance according to one embodiment of the present disclosure, and FIG. 2 is a side sectional view showing an internal structure of the home appliance illustrated in FIG. 1.

Referring to FIG. 1, a home appliance according to one embodiment of the present disclosure may have an exterior formed by a main body 10. The main body 10 may be provided in a form having a substantially rectangular parallelepiped shape. Such a main body 10 may be formed of a material having a predetermined strength in order to protect a plurality of components installed in an internal space thereof.

In the present embodiment, the home appliance is illustrated as being a cooking appliance. More specifically, the home appliance of the present embodiment is illustrated as being a cooking appliance used to cook food, and among which, illustrated as being a cooking appliance in a form of a composite cooking appliance in which a sealed cooking appliance and an open cooking appliance are simultaneously installed, but the present disclosure is not limited thereto.

As another example, the home appliance of the present disclosure may be a cooking appliance such as a gas range, a cooktop, a microwave oven, or an oven, rather than a composite cooking appliance, or may be another appliance such as a dishwasher or a washing machine other than a cooking appliance.

In the present embodiment, a case in which the home appliance is a cooking appliance will be described as an example.

The main body 10 includes a cavity 11 forming a framework of the main body 10. The cavity 11 may be formed in a form of a hexahedron having a front side open, and a cooking chamber 12 is provided inside the cavity 11.

The cavity 11 may be formed in a form of a hexahedron having a front side open, and the cooking chamber 12 may be formed inside the cavity 11. That is, the cooking chamber 12 may be formed as a substantially hexahedral space arranged inside the cavity 11 and may be formed as a space opened toward a front side.

In a state in which such a cooking chamber 12 is shielded, the inside of the cooking chamber 12 may be heated, whereby food may be cooked. That is, in the cooking appliance of the present embodiment provided as a sealed cooking appliance, the cooking chamber 12 is substantially a space in which food is cooked.

A heating device for heating the cooking chamber 12 is provided in the cooking appliance. The heating device may be provided as a burner using gas fuel or may be provided as a heater using electricity. As such, a structure of the heating device may be changed depending on a type of a heat source used.

As an example, the heating device may include a convection device 20 arranged at a rear side of the cooking chamber 12. The convection device 20 enables an internal space of the cooking chamber 12 to be uniformly heated by suctioning air inside the cooking chamber 12, heating the air, and then discharging it back into the inside of the cooking chamber 12 while circulating the air.

In addition, the heating device may include a broil burner or a grill heater. The broil burner or the grill heater may be arranged at an upper portion of the cooking chamber 12 so as to heat an internal space of the cooking chamber 12 from an upper portion of the cooking chamber 12.

A door 30 for selectively opening and closing the cooking chamber 12 may be rotatably provided in the cooking appliance. As an example, the door 30 may be provided in a form in which the upper end of the door 30 rotates up and down about a lower end thereof in a pull-down manner to open and close the cooking chamber 12.

A cooktop portion 40 provided to cook food by heating food or a container containing food may be arranged on an upper portion of the main body 10. The cooktop portion 40 may be provided with a top plate forming an upper exterior and closing an upper end of the main body 10.

At least one heating portion for heating food to be cooked or a container containing the food may be provided in a central portion of the cooktop portion 40. For example, the heating portion may be provided as a heating device using gas fuel.

As another example, the heating portion may be provided as an induction heater using electricity. As such, a structure of the heating portion may be changed depending on a type of a heat source used.

A control panel 50 may be provided in the cooking appliance. An input portion configured to input an operation signal for operating the cooking appliance by a user may be provided on the control panel 50. A plurality of operation devices 100 may be provided on the input portion, and a user may directly input an operation signal through the plurality of operation devices 100.

Also, the control panel 50 may further be provided with a display portion 55 configured to provide operation information of the cooking appliance or cooking information of food, and the like. A user may check various information related to an operation state, and the like, of the cooking appliance through the display portion 55.

An electrical equipment chamber 60 configured to provide a space in which electrical components are located may be provided in an internal space of the main body 10, that is, in a space between the cooktop portion 40 and the cooking chamber 12. The electrical equipment chamber 60 may be a space formed between the cooktop portion 40 and the cooking chamber 12, or may be a space conceptualized as a combination of a space formed between the cooktop portion 40 and the cooking chamber 12 and a space inside the cooktop portion 40. A front side of the electrical equipment chamber 60 may be shielded by the control panel 50 or, as illustrated in the present embodiment, may be shielded by the door 30.

### [Entire structure of operation device]

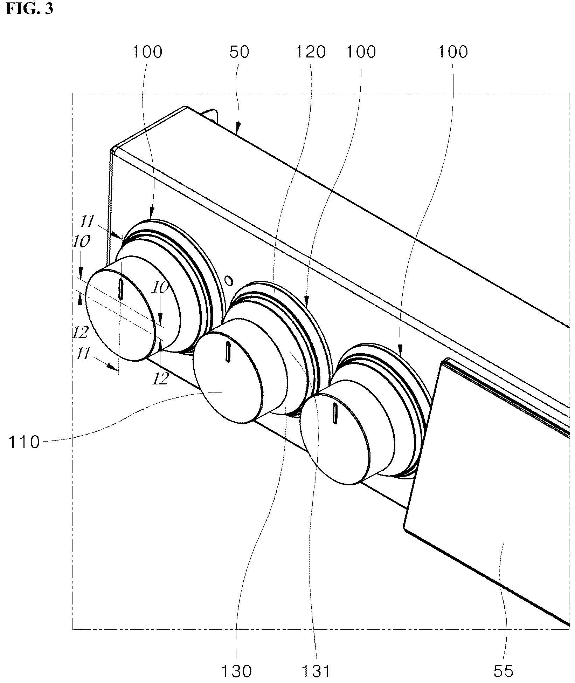

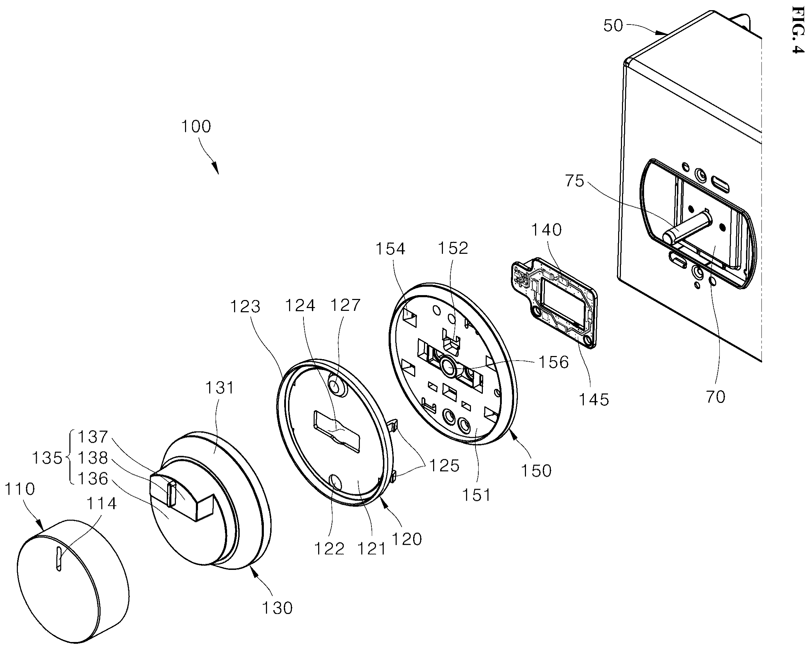

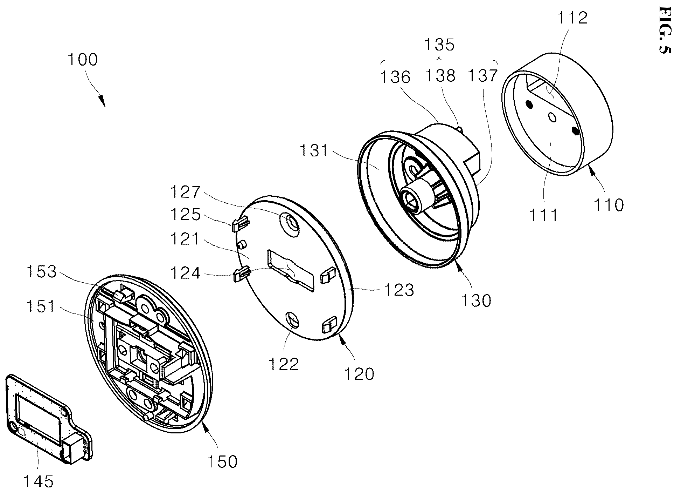

FIG. 3 is a view illustrating the operation device illustrated in FIG. 1 in a separated state, FIG. 4 is a front exploded perspective view illustrating an exploded state of an operation device according to one embodiment of the present disclosure, and FIG. 5 is a rear exploded perspective view of an operation device according to one embodiment of the present disclosure.

Referring to FIGS. 3 to 5, a plurality of operation devices 100 may be arranged on the control panel 50. As an example, the control panel 50 is arranged on an upper portion of a front side of the home appliance and may form a portion of a front exterior of the home appliance. The operation device 100 may be arranged on a front surface of the control panel 50.

As another example, the control panel 50 may be arranged on a top plate of the cooktop portion 40. In this case, the operation device 100 may be arranged on an upper surface of the control panel 50.

In the present embodiment, a form in which the control panel 50 is arranged on the upper portion of the front side of the home appliance is illustrated. The operation device 100 is arranged on a front side of the control panel 50, and a plurality of operation devices 100 may be arranged along a lateral direction.

In the present embodiment, each of the operation devices 100 is illustrated as being provided to have the same or a similar configuration. In this case, each of the operation devices 100 may be provided to control operations of different targets or may be provided to implement different functions from each other.

For example, any one of the plurality of operation devices 100 may be provided as an operation device 100 for controlling an operation of a heating portion provided in an oven, and another one may be provided as an operation device for controlling an operation of a heating portion provided in the cooktop portion 40. As another example, any one of the plurality of operation devices 100 may be provided as an operation device 100 for selecting a type and a state of a cooking target, and another one may be provided as an operation device 100 for selecting a degree of cooking or a cooking time.

The operation device 100 may include a knob 110. The knob 110 is rotatably provided with respect to the panel on which the operation device 100 is installed. In the present embodiment, the operation device 100 is illustrated as being installed on the control panel 50, and accordingly, the knob 110 of the present embodiment may be rotatably provided with respect to the control panel 50.

The knob 110 may form at least a portion of a front exterior of the operation device 100. The knob 110 may rotate about a control shaft 75. The control shaft 75 may be rotatably installed on an object to be adjusted 70 provided in the home appliance. The knob 110 may be coupled to the control shaft 75 and may be rotated by a user's operation to rotate the control shaft 75.

In the present embodiment, the object to be adjusted 70 is illustrated as being a switch or a valve assembly. When the object to be adjusted 70 is a switch, the knob 110 may be rotated by a user's operation to rotate the control shaft 75, thereby changing a type of a signal generated from the switch. When the object to be adjusted 70 is a valve assembly, the knob 110 may be rotated by a user's operation to rotate the control shaft 75, thereby adjusting an amount of fuel supplied to a heating portion of the home appliance.

As an example, the control shaft 75 may be a shaft extending in a front-rear direction. The knob 110 may be coupled to the control shaft 75 at a front side of the control shaft 75 in this case. As another example, the control shaft 75 may be a shaft extending in an up-down direction. In this case, the knob 110 may be coupled to the control shaft 75 at an upper portion of the control shaft 75.

In the present embodiment, a form in which the knob 110 is coupled to the control shaft 75 provided as a shaft extending in a front-rear direction is illustrated. The knob 110 of the present embodiment is coupled to the control shaft 75 at a front side of the control panel 50 and may rotate the control shaft 75 while rotating about the control shaft 75.

The operation device 100 may also include a first light diffusion guide 120. The first light diffusion guide 120 may be arranged between a panel, that is, the control panel 50, and the knob 110. For example, the first light diffusion guide 120 may be arranged at a front side of the control panel 50 and may be arranged at a rear side of the knob 110. Such a first light diffusion guide 120 may be installed on the control panel 50.

The operation device 100 may also include a light source 140. The light source 140 may be provided so as to emit light toward the first light diffusion guide 120. The light source 140 may be provided in a form mounted on a substrate 145 in a PCB form and may be installed on the control panel 50 or a base member 150 to be described later.

The first light diffusion guide 120 may be provided as a structure having characteristics of a light guide. That is, light emitted from the light source 140 may be incident to the first light diffusion guide 120, and light incident to an inside of the first light diffusion guide 120 may move inside the first light diffusion guide 120. And a portion of light moving inside the first light diffusion guide 120 may be emitted to an outside.

Accordingly, light emitted from the light source 140 and incident to an inside of the first light diffusion guide 120 may be diffused to an entirety of the first light diffusion guide 120. And a portion of this light may be emitted to an outside of the first light diffusion guide 120 and may be delivered to a second light diffusion guide 130 to be described later, or may implement lighting around the first light diffusion guide 120.

The operation device 100 may also include a second light diffusion guide 130. As an example, the second light diffusion guide 130 may be arranged at a front side of the first light diffusion guide 120. Such a second light diffusion guide 130 may be provided as a structure having characteristics of a light guide, similar to the first light diffusion guide 120.

That is, light incident into the interior of the second light diffusion guide 130 may propagate within the second light diffusion guide 130, and a portion of the light propagating inside the second light diffusion guide 130 may be emitted to the outside.

Accordingly, light emitted from the light source 140 or the first light diffusion guide 120 and incident to an inside of the second light diffusion guide 130 may be diffused to an entirety of the second light diffusion guide 130. And a portion of this light may be delivered to an inside of the knob 110 to implement lighting at the knob 110, or may be emitted to an outside in a region between the first light diffusion guide 120 and the knob 110 to implement lighting around the first light diffusion guide 120 and the knob 110.

The operation device 100 may also include a base member 150. The base member 150 may be installed on the control panel 50. At least one of the light source 140 and the first light diffusion guide 120 may be installed on the base member 150.

### [Structure of first light diffusion guide]

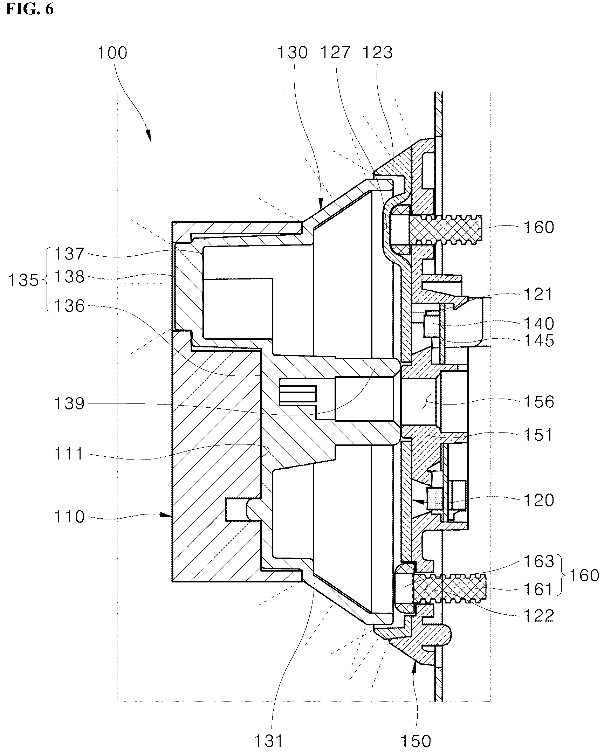

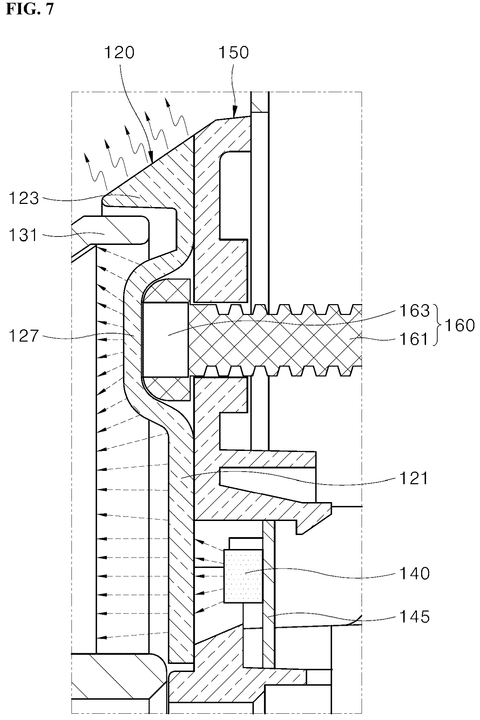

FIG. 6 is a sectional view showing an internal structure of an operation device according to one embodiment of the present disclosure, and FIG. 7 is an enlarged view illustrating an enlarged portion 7 of FIG. 6.

Referring to FIGS. 4 to 7, the first light diffusion guide 120 may include a light transmission portion 121. With respect to an axial direction, that is, with respect to a front-rear direction, the light transmission portion 121 may be arranged between the light source 140 and the second light diffusion guide 130. The light transmission portion 121 may be provided so as to transmit light received from the light source 140 to the second light diffusion guide 130.

As an example, the light transmission portion 121 may form a plane orthogonal to an axial direction. For example, the light transmission portion 121 may be provided in a disk shape forming a plane parallel to a front surface of the control panel 50. Most of a region of such a light transmission portion 121 may be arranged between the control panel 50 and the second light diffusion guide 130 and may be arranged at a position covered by the second light diffusion guide 130.

The first light diffusion guide 120 may also include an edge lighting portion 123. The edge lighting portion 123 may be arranged at an outer side in a diametrical direction of the light transmission portion 121. As an example, the edge lighting portion 123 may be formed in a ring shape surrounding an edge of the light transmission portion 121. The edge lighting portion 123 and the light transmission portion 121 configured as such may be connected in a diametrical direction.

The second light diffusion guide 130 configured as above may emit a portion of light incident to the light transmission portion 121 in a region between the control panel 50 and the second light diffusion guide 130. The light emitted from such an edge lighting portion 123 may implement lighting illuminating a region between the control panel 50 and the second light diffusion guide 130.

The edge lighting portion 123 may be arranged between the control panel 50 and the second light diffusion guide 130 and may be arranged at a position not covered by the second light diffusion guide 130. That is, the edge lighting portion 123 may be arranged at an outer side in a diametrical direction of the second light diffusion guide 130. Such an edge lighting portion 123 may implement lighting at an outer side in a diametrical direction of the knob 110 and the second light diffusion guide 130.

The edge lighting portion 123 may also be formed to protrude in an axial direction from an outer edge of the light transmission portion 121. At least a portion of such an edge lighting portion 123 protrudes so as to cover a space between the control panel 50 and the second light diffusion guide 130 at an outer side in a diametrical direction.

According to the present embodiment, a certain gap may be formed between the control panel 50 and the second light diffusion guide 130 spaced apart from each other in an axial direction with the light transmission portion 121 interposed therebetween, and a portion of the edge lighting portion 123 protruding in the axial direction, more specifically in a front direction, may cover this gap at an outer side in a diametrical direction.

The edge lighting portion 123 configured as described above forms a shielding wall covering between the control panel 50 and the second light diffusion guide 130 and may implement mood lighting in a region between the control panel 50 and the operation device 100. The first light diffusion guide 120 including such an edge lighting portion 123 may contribute to enabling the home appliance to provide a further enhanced emotional quality.

### [Structure of second light diffusion guide]

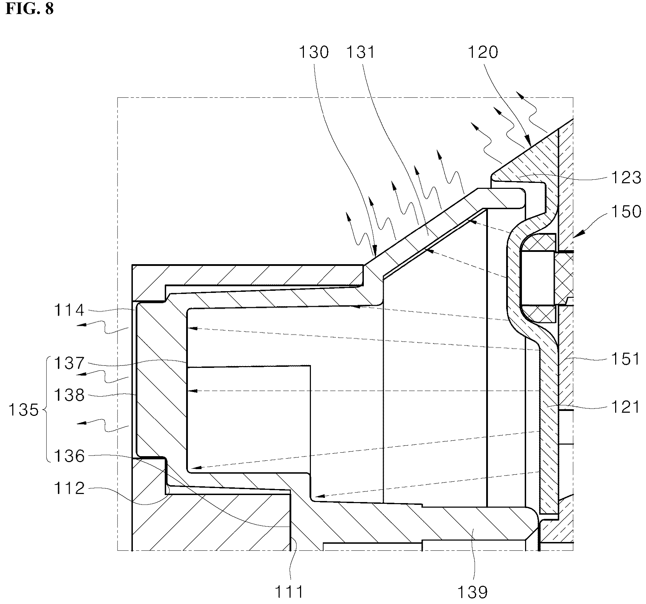

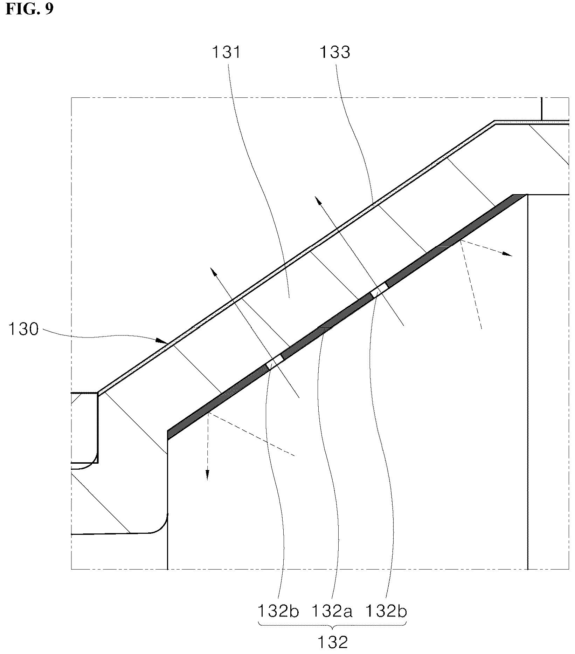

FIG. 8 is an enlarged view illustrating an enlarged portion 8 of FIG. 6, and FIG. 9 is an enlarged view illustrating an enlarged portion 9 of FIG. 8.

Referring to FIGS. 6 and 8, the second light diffusion guide 130 may include a first guide portion 131. With respect to an axial direction, the first guide portion 131 may be arranged between the first light diffusion guide 120 and the knob 110.

Light emitted from the light source 140 or the first light diffusion guide 120 may be incident to the first guide portion 131, and light incident to an inside of the first guide portion 131 may be diffused to an entirety of the first guide portion 131. And a portion of this light may be emitted to an outside of the first guide portion 131 and may implement lighting around the first guide portion 131, more specifically in a region between the first light diffusion guide 120 and the knob 110.

The second light diffusion guide 130 may also include a second guide portion 135. With respect to an axial direction, the first guide portion 131 may be arranged between the first light diffusion guide 120 and the second guide portion 135. For example, the second guide portion 135 may be arranged at a front side of the first guide portion 131.

As an example, the first guide portion 131 may be formed in a substantially ring shape. A hollow portion may be formed inside such a first guide portion 131, and a rear surface of the first guide portion 131 may be opened toward the light transmission portion 121.

More specifically, the first guide portion 131 may be formed in a shape in which a diameter becomes narrower toward a front side. An outer circumferential surface of the first guide portion 131 may include an inclined surface inclined in a direction between an axial direction and a diametrical direction.

The second guide portion 135 may be provided in a form covering an opened front surface of the first guide portion 131. According to the present embodiment, the knob 110 may cover the second guide portion 135 and may be coupled to the second light diffusion guide 130. As an example, most of a region of the second guide portion 135 may be accommodated in a space formed inside the knob 110, and the second guide portion 135 may be coupled to the knob 110 inside the knob 110. Such a second guide portion 135 may be formed in a shape corresponding to an inner shape of the knob 110.

As an example, the second guide portion 135 may include a plane portion 136. The plane portion 136 may form a plane covering the opened front surface of the first guide portion 131 and may form a plane parallel to the light transmission portion 121.

The plane portion 136 may also form a plane parallel to a bottom surface 111 of the knob 110. Such a plane portion 136 may be brought into contact with the bottom surface 111 of the knob 110 when coupling between the knob 110 and the second light diffusion guide 130 is performed. The bottom surface 111 of the knob 110 and the plane portion 136, which are brought into contact with each other in a front-rear direction, may form a coupling surface between the knob 110 and the second light diffusion guide 130.

In addition, the second guide portion 135 may further include a protrusion surface portion 137. The protrusion surface portion 137 may form a surface protruding further forward than the plane portion 136.

According to the present embodiment, a recessed portion 112 may be provided in the knob 110. The recessed portion 112 may be formed in a shape in which a portion of the knob 110 is recessed forward from the bottom surface of the knob 110.

The protrusion surface portion 137 may be formed in a shape protruding on the second guide portion 135 corresponding to a shape of the recessed portion 112, and may be inserted into the recessed portion 112 when coupling between the knob 110 and the second light diffusion guide 130 is performed.

When coupling between the knob 110 and the second light diffusion guide 130 is performed, the bottom surface of the knob 110 and the plane portion 136 may be brought into contact with each other in a front-rear direction, and the protrusion surface portion 137 may be inserted into the recessed portion 112. By inserting the protrusion surface portion 137 into the recessed portion 112, a fitting coupling between the knob 110 and the second light diffusion guide 130 may be achieved, and a coupling position between the knob 110 and the second light diffusion guide 130 may be guided.

In addition, in a state in which the bottom surface of the knob 110 and the plane portion 136 are brought into contact with each other in a front-rear direction, the coupling between the knob 110 and the second light diffusion guide 130 may be firmly achieved by a fastening member such as a screw penetrating the bottom surface of the knob 110 and the plane portion 136 in a front-rear direction. At this time, an operation of fastening the fastening member to a coupling surface of the second light diffusion guide 130 and the knob 110 may be performed at a rear side of the second light diffusion guide 130.

### [Lighting implementation structure of second light diffusion guide]

According to the present embodiment, at least a portion of the first guide portion 131 and the second guide portion 135 may be arranged to face at least a portion of the first light diffusion guide 120 in an axial direction so as to receive light emitted from the first light diffusion guide 120. More specifically, at least a portion of the first guide portion 131 and the second guide portion 135 may be arranged to face at least a portion of the light transmission portion 121 in an axial direction so as to receive light emitted from the light transmission portion 121.

In the present embodiment, most of regions of the first guide portion 131 and the second guide portion 135 are illustrated as being arranged to face the light transmission portion 121 in an axial direction. For example, the first guide portion 131 may be arranged such that a plane formed by the light transmission portion 121 and an inclined surface formed by the first guide portion 131 are connected to form an inner angle, and most of regions of the second guide portion 135 may be arranged to face a plane formed by the light transmission portion 121 in parallel. Accordingly, light emitted forward from the light transmission portion 121 may be effectively delivered to the first guide portion 131 and the second guide portion 135.

Referring to FIGS. 4 and 8, a through-hole 114 may be provided on a front surface of the knob 110. The through-hole 114 may be formed to penetrate the front surface of the knob 110 in an axial direction. A portion of the second guide portion 135 may be exposed to an outside of the knob 110 through the through-hole 114 to implement lighting. For example, a portion of the second guide portion 135 may be exposed to a front side of the knob 110 through the through-hole 114 to implement lighting on the front surface of the knob 110.

As an example, the second light diffusion guide 130 may include a protrusion portion 138. The protrusion portion 138 may protrude from the second guide portion 135 so as to be insertable into the through-hole 114. For example, the protrusion portion 138 may protrude forward from the front surface of the protrusion surface portion 137 and may be insertable into the through-hole 114 when coupling between the knob 110 and the second light diffusion guide 130 is performed.

According to the present embodiment, light incident to an inside of the second light diffusion guide 130 may be diffused to an entirety of the second light diffusion guide 130, and accordingly, light diffused from the protrusion surface portion 137 and the protrusion portion 138 inside the second light diffusion guide 130 may implement lighting at the protrusion portion 138. That is, lighting may be implemented at the front surface of the knob 110 through a portion of the second guide portion 135 exposed forward of the knob 110 through the through-hole 114.

As an example, the protrusion portion 138 may be fitted to the front surface of the knob 110, and the front surface of the protrusion portion 138 may be coupled to the knob 110 to form the same plane as the front surface of the knob 110. Accordingly, lighting may be implemented on the same plane as the front surface of the knob 110, and lighting implemented as such may contribute to allowing the home appliance to provide further enhanced emotional quality.

The operation device 100 of the present embodiment may implement lighting not only at the front surface of the knob 110 as described above, but also between the knob 110 and the first light diffusion guide 120. Such lighting may be implemented by the second light diffusion guide 130, and more specifically, by the first guide portion 131.

Referring to FIGS. 8 and 9, the second light diffusion guide 130 of the present embodiment may include an inner member 132. The inner member 132 may be arranged between an inner surface of the first guide portion 131 facing the light transmission portion 121 and the light transmission portion 121. For example, the inner member 132 may be arranged on an inner circumferential surface of the first guide portion 131.

The inner member 132 may include a light-shielding portion 132a. The light-shielding portion 132a may be provided to block light transmission between the light transmission portion 121 and the first guide portion 131. For example, the light-shielding portion 132a may be arranged on the inner circumferential surface of the first guide portion 131 and may serve to block light from entering an inside of the first guide portion 131.

The inner member 132 may also include a light-transmitting portion 132b. The light-transmitting portion 132b may be provided to allow light transmission between the light transmission portion 121 and the first guide portion 131. The light-transmitting portion 132b may be arranged in a region on the inner member 132 where the light-shielding portion 132a is not arranged.

Light emitted from the light source 140 or the light transmission portion 121 may pass through the light-transmitting portion 132b and may be transmitted to the first guide portion 131. That is, at a position where the light-shielding portion 132a is arranged, light may not pass through the first guide portion 131, and at a position where the light-transmitting portion 132b is arranged, light may pass through the first guide portion 131.

As an example, the light-shielding portion 132a may be formed as a result of coating a light-shielding material that blocks light on an inner surface of the first guide portion 131. The light-transmitting portion 132b may be formed as a result of removing a part of the shielding material coated on the inner surface of the first guide part 131, that is, removing a part of the shielding portion 132a coated on the inner surface of the first guide portion 131.

As an example, the light-transmitting portion 132b may be formed in a shape representing letters, symbols, and the like that lighting implemented through the first guide portion 131 intends to display. For example, the light-transmitting portion 132b may be formed in a shape representing a pictogram that lighting implemented through the first guide portion 131 intends to display.

According to the present embodiment, when lighting is not implemented by the first guide portion 131, no letters, symbols, and the like are displayed on an outer surface of the first guide portion 131. However, when lighting is implemented by the first guide portion 131, letters, symbols, and the like may be clearly displayed on an outer surface of the first guide portion 131 by bright lighting.

As described above, an outer circumferential surface of the first guide portion 131 may include an inclined surface, and this inclined surface may be formed as a surface directed between a front side and a centrifugal direction. And the light-transmitting portion 132b may be arranged on this inclined surface. Accordingly, letters, symbols, and the like displayed on the first guide portion 131 may be clearly visible from a front side and a lateral side of the home appliance.

In addition, the second light diffusion guide 130 of the present embodiment may further include an outer member 133. The outer member 133 may be arranged to be spaced apart from the inner member 132 with the first guide portion 131 interposed therebetween. For example, the outer member 133 may be arranged on an outer circumferential surface of the first guide portion 131.

The outer member 133 may be provided so as to allow light emitted from the first guide portion 131 to be transmitted. That is, light incident to an inside of the first guide portion 131 through the light-transmitting portion 132b may pass through the outer member 133 and may be emitted to an outside of the first guide portion 131.

According to the present embodiment, light transmittance of the outer member 133 may be set to be higher than light transmittance of the light-shielding portion 132a and lower than light transmittance of the first guide portion 131. For example, if light transmittance of the light-shielding portion 132a is 0% and light transmittance of the first guide portion 131 is 100%, light transmittance of the outer member 133 may be set to 50%. As an example, the outer member 133 may be formed as a result of a semi-transmissive material having light transmittance of about 50% being coated on an outer surface of the first guide portion 131.

The outer member 133 provided as described above may contribute to allowing lighting implemented on the first guide portion 131 to be expressed softly without glare, thereby effectively improving the recognizability of characters, symbols, and the like indicated by the first guide portion 131.

### [Coupling structure between base member and surrounding components]

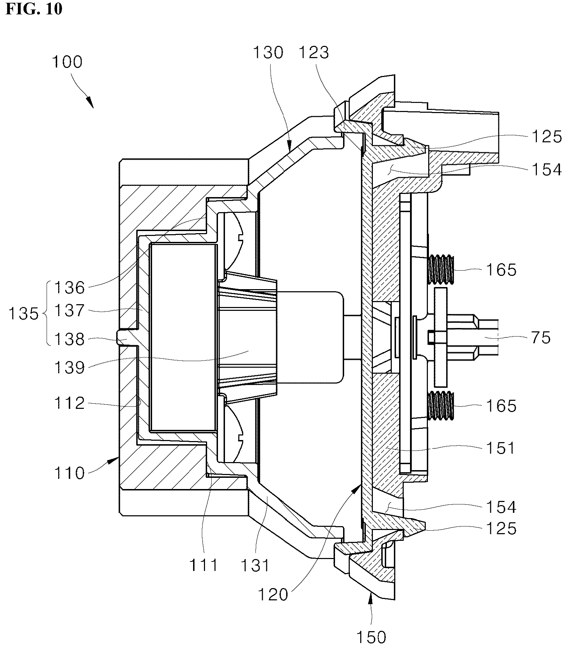

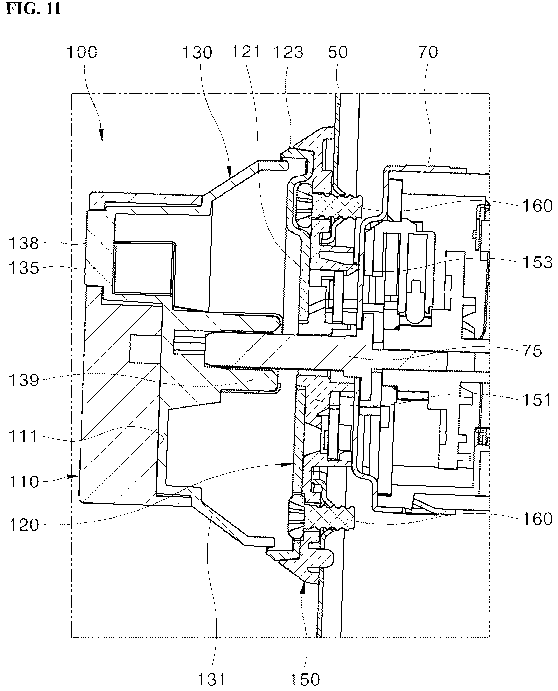

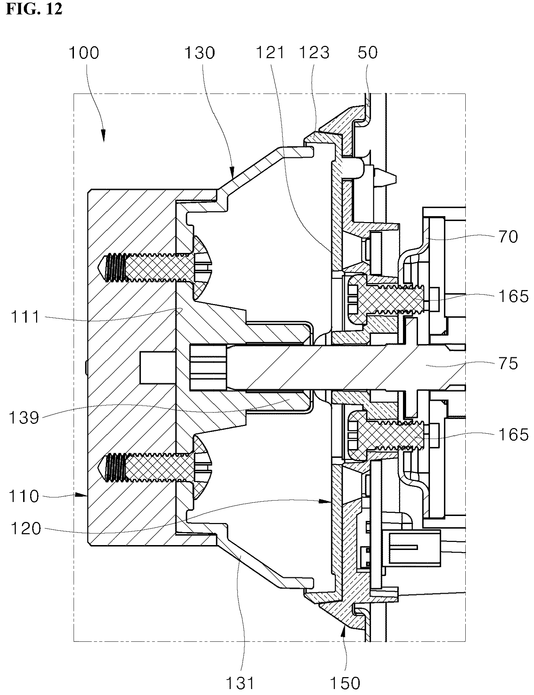

FIG. 10 is a sectional view taken along line 10-10 of FIG. 3, FIG. 11 is a sectional view taken along line 11-11 of FIG. 3, and FIG. 12 is a sectional view taken along line 12-12 of FIG. 3.

Referring to FIGS. 4 to 6 and FIGS. 10 to 11, the base member 150 may be arranged between the control panel 50 and the first light diffusion guide 120. For example, the base member 150 may be arranged at a front side of the control panel 50 and at a rear side of the first light diffusion guide 120. Such a base member 150 may be installed on the control panel 50.

At least one of the light source 140 and the first light diffusion guide 120 may be installed on the base member 150. In the present embodiment, both the light source 140 and the first light diffusion guide 120 are illustrated as being installed on the base member 150.

As an example, the substrate 145 on which the light source 140 is mounted may be arranged between the control panel 50 and the base member 150 and may be installed on the base member 150. The first light diffusion guide 120 may also be arranged between the knob 110 and the base member 150 and may be installed on the base member 150. For example, the substrate 145 on which the light source 140 is mounted may be installed on a rear surface of the base member 150, and the first light diffusion guide 120 may be installed on a front surface of the base member 150.

The base member 150 may include a base plate 151. The base plate 151 may be arranged between the control panel 50 and the first light diffusion guide 120 and may form a surface facing the light transmission portion 121 of the first light diffusion guide 120. For example, the base plate 151 may be provided in a disk shape forming a plane parallel to the light transmission portion 121.

According to the present embodiment, the substrate 145 on which the light source 140 is mounted may be installed on a rear surface of the base plate 151. And the base plate 151 may be provided with a light through-hole 152. The light through-hole 152 may form a passage connecting the light source 140 and the light transmission portion 121 in the base plate 151. As an example, the light through-hole 152 may be formed to penetrate the base plate 151 in an axial direction.

Light emitted from the light source 140 arranged at a rear side of the base member 150 may pass through the base member 150 through the light through-hole 152 and may be incident to an inside of the first light diffusion guide 120.

Also, according to the present embodiment, the first light diffusion guide 120 may be installed on a front surface of the base plate 151. In the present embodiment, the first light diffusion guide 120 is illustrated as being detachably coupled to the base plate 151.

As an example, the first light diffusion guide 120 may include a plurality of first hook members 125. Correspondingly, the base plate 151 may be provided with a plurality of hook holes 154. Each hook hole 154 may be formed to penetrate the base plate 151 in an axial direction, and each first hook member 125 may penetrate the base plate 151 through the hook hole 154 and may be coupled to the base member 150.

The first hook member 125 and the hook hole 154 may be arranged at positions that do not interfere with coupling between the substrate 145 on which the light source 140 is mounted and the base member 150, and movement of light through the light through-hole 152. For example, the first hook member 125 and the hook hole 154 may be arranged at positions closer to an outer edge of the base member 150 than the light source 140 and the substrate 145.

According to the present embodiment, the base member 150 may be coupled to the control panel 50 by a first fastening member 160. As an example, the first fastening member 160 may be provided in a screw form including a body portion 161 and a head portion 163. Such a first fastening member 160 may penetrate the base plate 151 and the control panel 50 in sequence from a front side of the base plate 151 and may couple the base member 150 to the control panel 50.

In this case, the body portion 161 having a screw thread formed on its outer circumferential surface may penetrate the base plate 151 and the control panel 50. The head portion 163 arranged at a front end of the body portion 161 may be connected to the body portion 161 so as to protrude outward from the base plate 151.

That is, when the first fastening member 160 is fastened to the base member 150, the head portion 163 protruding outwardly in a diametrical direction of the body portion 161 may protrude further forward from a front surface of the base plate 151. When viewed from a lateral side, at least a portion of the head portion 163 may be arranged in a region overlapping the light transmission portion 121 of the first light diffusion guide 120.

For example, when the first light diffusion guide 120 is coupled to the base member 150 and the first fastening member 160 is fastened to the base member 150, at least a portion of the head portion 163 may be inserted into an inside of the light transmission portion 121 or may pass through the light transmission portion 121 in an axial direction.

More specifically, a first through-hole portion 122 may be provided in the light transmission portion 121, and at least a portion of the head portion 163 may be inserted into an inside of the light transmission portion 121 through the first through-hole portion 122 or may pass through the light transmission portion 121 in an axial direction.

The first through-hole portion 122 may form a passage for allowing the first fastening member 160 to pass in an axial direction in the first light diffusion guide 120, more specifically, in the light transmission portion 121. As an example, the first through-hole portion 122 may be formed to penetrate the light transmission portion 121 in an axial direction.

The first through-hole portion 122 formed as described above may contribute to allowing the base plate 151 and the light transmission portion 121 to be arranged at positions as close as possible to each other, even in the presence of the head portion 163 of the first fastening member 160 protruding to a front side of the base member 150. As the base plate 151 and the light transmission portion 121 are arranged close to each other, a clearance between the control panel 50 and the knob 110 may be reduced, and a distance between the light source 140 and the first light diffusion guide 120 may be reduced, so that light transmission to the first light diffusion guide 120 may be performed more effectively.

That is, since a protruding portion of the first fastening member 160 for coupling the base member 150 to the control panel 50 may pass through the light transmission portion 121 through the first through-hole portion 122, the light transmission portion 121 may be arranged close to the base plate 151, and as a result, the clearance between the control panel 50 and the knob 110 may be reduced and light transmission to the first light diffusion guide 120 may be performed more effectively. Accordingly, the home appliance of the present embodiment may provide an effect of improving quality of lighting implemented by the operation device 100, an operation feeling of the operation device 100, and an appearance of the home appliance.

The first light diffusion guide 120 of the present embodiment may also include a cover portion 127. As an example, the cover portion 127 may be formed in a shape in which a portion of the light transmission portion 121 is recessed forward, that is, in a direction away from the base plate 151.

As an example, when viewed from a rear side, the cover portion 127 may be in a groove shape in which a portion of a rear surface of the light transmission portion 121 is recessed forward, and when viewed from a front side, the cover portion 127 may be in a dome shape in which a portion of a front surface of the light transmission portion 121 is protruded forward.

The base member 150 may be coupled to the control panel 50 by a plurality of first fastening members 160, and at least one of head portions 163 of the plurality of first fastening members 160 may be arranged in a region facing the cover portion 127 in an axial direction. At least a portion of such a head portion 163 may be inserted into a space surrounded by the cover portion 127.

The cover portion 127 may be connected to the light transmission portion 121 so that light transmission between the light transmission portion 121 and the cover portion 127 is possible. That is, light incident to an inside of the light transmission portion 121 may move inside the light transmission portion 121 while passing through the cover portion 127, or may be emitted to an outside of the light transmission portion 121 toward the second light diffusion guide 130 from the cover portion 127.

According to the present embodiment, a protruding portion of the first fastening member 160 for coupling the base member 150 to the control panel 50 may be inserted into the space secured by the cover portion 127, and accordingly, even in the presence of the head portion 163 of the first fastening member 160 protruding at a front surface of the base member 150, the base plate 151 and the light transmission portion 121 may be arranged to be as close to each other as possible.

That is, the cover portion 127 performs a role similar to the first through-hole portion 122 described above. However, the cover portion 127 is not formed to penetrate the light transmission portion 121 like the first through-hole portion 122, and is connected to the light transmission portion 121 so that light transmission between the light transmission portion 121 and the cover portion 127 is possible.

Such a cover portion 127 may contribute to enabling light diffusion and light emission by the light transmission portion 121 even in a region where the first fastening member 160 is arranged, thereby contributing to improving a quality of lighting implemented by the first light diffusion guide 120 and the second light diffusion guide 130.

In the present embodiment, the first light diffusion guide 120 is illustrated as including both the first through-hole portion 122 and the cover portion 127. When the first light diffusion guide 120 does not include the first through-hole portion 122 and only the cover portion 127 exists, the possibility of interference between the cover portion 127 and the second light diffusion guide 130 inevitably increases, compared to cases in which the first light diffusion guide 120 includes both the first through-hole portion 122 and the cover portion 127, or only the first through-hole portion 122 exists, because the cover portion 127 is formed in a shape protruding toward the second light diffusion guide 130.

However, when the first light diffusion guide 120 does not include the cover portion 127 and only the first through-hole portion 122 exists, a problem may occur in that an area in which light diffusion and light emission are performed by the light transmission portion 121 becomes narrow and nonuniformity of a light-emitting surface increases.

In consideration of such matters, in the present embodiment, the first light diffusion guide 120 includes both the first through-hole portion 122 and the cover portion 127, and some of a plurality of first fastening members 160 are arranged in a region in which the cover portion 127 is formed, and the others are arranged in a region in which the first through-hole portion 122 is formed.

In addition, when the operation device 100 is arranged on a front side of the home appliance, that is, when the knob 110 is arranged on a front side of the control panel 50, the first through-hole portion 122 may be arranged below the cover portion 127. As an example, the cover portion 127 may be arranged above the control shaft 75, and the first through-hole portion 122 may be arranged below the control shaft 75.

When the operation device 100 is arranged on a front side of the home appliance, a region located at a lower portion of the control shaft 75 of the operation device 100 is a region less visible to a user than a region located at an upper portion of the control shaft 75 of the operation device 100. In consideration of such matters, in the present embodiment, the cover portion 127 is arranged above the first through-hole portion 122 so that a region in which light diffusion and light emission are well performed by the cover portion 127 may be arranged in a region well visible to the user.

Accordingly, the operation device 100 of the present embodiment may effectively improve quality of lighting implemented by the operation device 100 while reducing a possibility of interference between the cover portion 127 and the second light diffusion guide 130.

The base member 150 may further include at least one second hook member 153. A plurality of hook holes may be provided in the control panel 50 correspondingly. Each hook hole may be formed to penetrate a front surface of the control panel 50 in an axial direction, and each second hook member 153 may penetrate the front surface of the control panel 50 through the hook hole to be coupled to the control panel 50.

A coupling between the second hook member 153 and the control panel 50 may provide a primary coupling portion between the control panel 50 and the base member 150 before a coupling between the control panel 50 and the base member 150 using the first fastening member 160 is performed. In addition, the coupling between the second hook member 153 and the control panel 50 may also provide a function of guiding a position of the base member 150 for performing the coupling between the control panel 50 and the base member 150 using the first fastening member 160.

Meanwhile, referring to FIGS. 4 to 6 and 12, the base member 150 may be coupled not only to the control panel 50 but also to an object to be adjusted 70. A coupling between the base member 150 and the object to be adjusted 70 may be performed by a second fastening member 165.

As an example, the object to be adjusted 70 may be disposed inside the home appliance, more specifically, on a rear side of a front surface of the control panel 50. The second fastening member 165 provided to couple the object to be adjusted 70 to the base member 150 may be provided in a screw form including a body portion and a head portion similarly to the first fastening member 160.

The second fastening member 165 provided as described above may penetrate the base plate 151 and a front surface of the object to be adjusted 70 in sequence from a front side of the base plate 151 to couple the base member 150 to the object to be adjusted 70.

Meanwhile, an adjustment shaft 75 installed on the object to be adjusted 70 may penetrate the control panel 50, the base member 150, and the first light diffusion guide 120 in an axial direction to be coupled to the second light diffusion guide 130. Also, a shaft coupling portion 139 may be provided in the second light diffusion guide 130.

The shaft coupling portion 139 may be arranged in an inner space of the second light diffusion guide 130 surrounded by the first guide portion 131 and the second guide portion 135, and may be provided in a boss shape protruding rearward from the second guide portion 135. The control shaft 75 may be coupled to the second light diffusion guide 130 through the shaft coupling portion 139, and the knob 110 may be coupled to the control shaft 75 through coupling with the second light diffusion guide 130.

As an example, a shaft through-hole 156 may be provided in the base member 150, and a second through-hole portion 124 may be provided in the first light diffusion guide 120. The shaft through-hole 156 and the second through-hole portion 124 may form passages in the base member 150 and the first light diffusion guide 120, respectively, for allowing the control shaft 75 to pass in an axial direction. The shaft through-hole 156 and the second through-hole portion 124 may be formed to penetrate the base plate 151 and the light transmission portion 121, respectively, in an axial direction.

In addition, the second through-hole portion 124 may form a passage in the first light diffusion guide 120 for allowing the second fastening member 165 to pass in an axial direction. As an example, a pair of second fastening members 165 may be arranged at a predetermined interval in a diametrical direction with the shaft through-hole 156 interposed therebetween, and the second through-hole portion 124 may be formed in a shape capable of forming passages for both the pair of second fastening members 165 and the control shaft 75.

According to the present embodiment, in a state where the substrate 145 on which the light source 140 is mounted is installed in the base member 150, the base member 150 may be installed on the control panel 50. That is, after the work of installing the substrate 145 in the base member 150 is first completed, the work of coupling the base member 150 to the control panel 50 with the second fastening member 165 may be performed. Then, the first light diffusion guide 120 may be installed on the base member 150 by a hook coupling that is performed in a manner of inserting the first hook member 125 into the base member 150 through the hook hole 154.

Accordingly, when the substrate 145 on which the light source 140 is mounted is previously installed on the base member 150, the installation of the light source 140 and the base member 150 may be easily and quickly performed only by a simple operation of coupling the base member 150 to the object to be adjusted 70.

In addition, since the installation of the first light diffusion guide 120 may also be easily and quickly performed only by a simple operation of hook-coupling the first light diffusion guide 120 to the base member 150, the difficulty of assembling the operation device 100 may be reduced, and an effect of effectively shortening the time required for assembling the operation device 100 may be provided.

Meanwhile, when the coupling between the base member 150 and the object to be adjusted 70 is performed in a state in which the first light diffusion guide 120 is already installed on the base member 150, the second through-hole portion 124 may provide a passage for allowing the second fastening member 165 to pass therethrough. That is, the second fastening member 165 may penetrate the base member 150 through a fastening hole of the base plate 151 exposed forward of the light transmission portion 121 through the second through-hole portion 124, and may be fastened to the base member 150 and the object to be adjusted 70.

At this time, the second through-hole portion 124 may contribute to allowing a fastening operation for coupling the base member 150 and the object to be adjusted 70 to be performed even after the first light diffusion guide 120 has already been installed on the base member 150, thereby improving the degree of freedom of assembling the operation device 100.

Further, by providing a passage for axially passing the second fastening member 165, the second through-hole portion 124 may contribute to allowing the base plate 151 and the light transmission portion 121 to be arranged as close to each other as possible, despite the presence of the head portion of the second fastening member 165 protruding to a front side of the base member 150.

### [Operation and effects of the operation device]

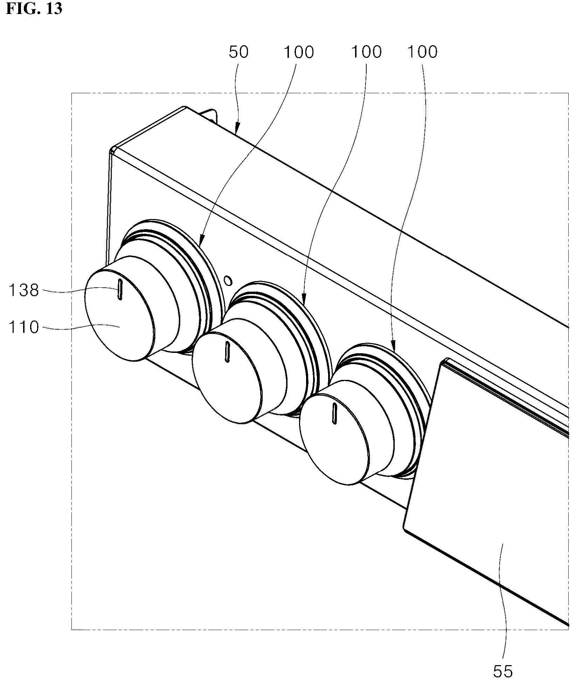

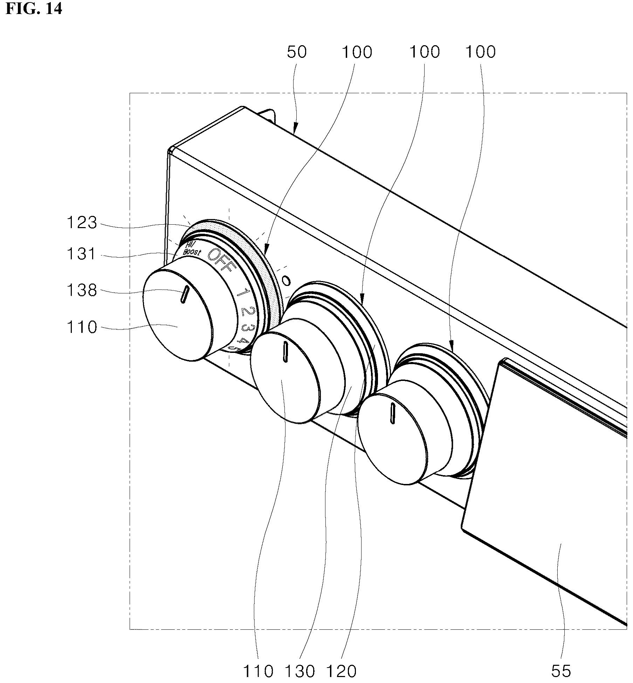

FIG. 13 is a view showing a state before lighting of an operation device according to one embodiment of the present disclosure, and FIG. 14 is a view showing a lit state of an operation device according to one embodiment of the present disclosure.

As illustrated in FIG. 13, when the operation device 100 is not operated, for example, when the protrusion portion 138 exposed on the front surface of the knob 110 is oriented toward the twelve o'clock direction, lighting is not implemented in the operation device 100.

As shown in FIGS. 6 and 14, in this state, when a user holds and rotates any one of the knobs 110 among the operation devices 100, lighting may be implemented in the corresponding operation device 100. At this time, the protrusion portion 138 may be illuminated at a position moved by an angle by which the knob 110 is rotated, thereby implementing lighting. Hereinafter, the lighting implemented at this position will be referred to as "first lighting."

In addition, lighting may also be implemented in a region where the first guide portion 131 of the second light diffusion guide 130 is arranged, for example, in a region between the control panel 50 and the knob 110, and more specifically, in a region between the first light diffusion guide 120 and the first lighting. Hereinafter, the lighting implemented at this location will be referred to as "second lighting."

The second light diffusion guide 130 is coupled to the knob 110 and may be rotated together with the knob 110 when the knob 110 is rotated. Accordingly, the positions of characters or symbols displayed by the lighting implemented by the first guide portion 131 may also be changed by the rotation of the knob 110.

In another example, the first guide portion 131 may be provided independently of the rotation of the knob 110. For example, the first guide portion 131 may be provided in a form in which it is separated from the second guide portion 135 such that it is not rotated together with the knob 110 and the second guide portion 135, and fixed to the first light diffusion guide 120 or the control panel 50. In this case, the positions of characters or symbols displayed by the lighting implemented by the first guide portion 131 may not be changed by the rotation of the knob 110.

According to the present embodiment, lighting implemented by the first guide portion 131 and lighting implemented by the second guide portion 135 may be arranged to be spaced apart from each other in an axial direction. That is, a position where the first lighting is implemented in the operation device 100 and a position where the second lighting is implemented may be positions spaced apart from each other in the axial direction, more specifically, in a front-rear direction.

For example, the first lighting may be implemented on a front surface of the knob 110, the second lighting may be implemented on a rear side of the knob 110, and the first lighting and the second lighting may be spaced apart by a length of the knob 110 in the front-rear direction.

In addition, lighting may be implemented in a region in which the first light diffusion guide 120 is arranged, for example, in a region between the control panel 50 and the knob 110, and more specifically, in a region between the control panel 50 and the second lighting. Hereinafter, lighting implemented in this position will be referred to as "third lighting."

According to the present embodiment, lighting implemented by the first light diffusion guide 120 and lighting implemented by the second light diffusion guide 130 may be arranged to be spaced apart from each other in an axial direction. That is, a position where the third lighting is implemented in the operation device 100 may be a position spaced apart in an axial direction, more specifically, in a front-rear direction, from positions where the first lighting and the second lighting are implemented.

For example, the first lighting is implemented on a front surface of the knob 110, the third lighting is implemented at a position adjacent to the control panel 50, and the second lighting may be implemented between the first lighting and the third lighting. Lighting implemented in the operation device 100 in this manner may perform different functions, respectively.

As an example, the first lighting may indicate a position of the knob 110 according to a rotation direction on a front surface of the knob 110. That is, the first lighting implemented by a portion of the second light diffusion guide 130 that is exposed to a front surface of the knob 110 may indicate whether the knob 110 has been operated and how much the operated knob 110 has been rotated.

In addition, the second lighting may indicate what change is made by the operation of the knob 110. For example, the second lighting implemented by a portion of the second light diffusion guide 130 that is exposed to a side surface of the knob 110 may serve to allow information such as a heating intensity or a heating time of a cooking appliance to be displayed on the knob 110.

Further, the third lighting may implement lighting that illuminates between the control panel 50 and the operation device 100. For example, the third lighting implemented by the first light diffusion guide 120 may implement mood lighting that softly illuminates surroundings of the operation device 100.

According to the present embodiment as described above, the home appliance may allow lighting to be implemented at three or more points of the operation device 100 in a form in which light emitted from one light source 140 is shared, so that lighting may be efficiently implemented at various positions of the operation device 100 without increasing the number or installation positions of the light source 140.

Such the home appliance according to the present embodiment may provide an effect of efficiently implementing lighting at various positions of the operation device 100 while suppressing an increase in cost required for installation of the operation device 100, by enabling an increase in the number of lighting implementation points without additionally installing the light source 140.

In addition, the home appliance according to the present embodiment may not only improve an appearance of the home appliance by allowing lighting to be implemented at multiple points of the operation device 100, but also provide information provided by the operation device 100, such as a current state of the operation device 100 or a pictogram, with high recognizability.

The embodiments are described above with reference to a number of illustrative embodiments thereof. However, the embodiments are provided as examples, and numerous other modifications and equivalent embodiments can be drawn by one having ordinary skill in the art from the embodiments. Thus, the technical scope of protection of the subject matter of the disclosure is to be defined according to the following claims.

### [Description of Reference Numerals]

10: main body
20: cooktop portion
30: oven portion
50: control panel
55: display portion
60: electrical equipment chamber
70: object to be adjusted
75: adjustment shaft
100: operation device
110: knob
111: bottom surface
112: recessed portion
114: through-hole
120: first light diffusion guide
121: light transmission portion
122: first through-hole portion
123: edge lighting portion
124: second through-hole portion
125: first hook member
127: cover portion
130: second light diffusion guide
131: first guide portion
132: inner member
132a: light-shielding portion
132b: light-transmitting portion
133: outer member
135: second guide portion
136: plane portion
137: protrusion surface portion
138: protrusion portion
139: shaft coupling portion
140: light source
145: substrate
150: base member
151: base plate
152: light through-hole
153: second hook member
154: hook hole
156: shaft through-hole
160: first fastening member
161: body portion
163: head portion
165: second fastening member (165)

## Claims

1. An electric appliance comprising:
a knob (110) rotatably provided with respect to a panel (50);
a first light diffusion guide (120) arranged between the panel (50) and the knob (110) and installed on the panel (50);
a light source emitting light toward the first light diffusion guide (120); and
a second light diffusion guide (130) having at least a portion arranged between the knob (110) and the first light diffusion guide (120) and delivering light incident from the first light diffusion guide (120) to an inside region of the knob (110),
wherein the first light diffusion guide (120) includes a light transmission portion (121) transmitting light received from the light source (140) to the second light diffusion guide (130), and an edge lighting portion (123) is configured to implement lighting by emitting a portion of the light incident to the light transmission portion (121) in a region between the panel (50) and the second light diffusion guide (130), and
wherein the second light diffusion guide (130) is configured to implement lighting by emitting a portion of the light incident thereto in a region between the first light diffusion guide (120) and the knob (110).

2. The home appliance of claim 1,
wherein the edge lighting portion (123) implements lighting at a radially outer side of the knob (110) and the second light diffusion guide (130).

3. The home appliance of claim 1 or 2,
wherein the light transmission portion (121) is formed in a shape including a plane perpendicular to an axial direction, and
wherein the edge lighting portion (123) protrudes in the axial direction from an outer edge of the light transmission portion (121).

4. The home appliance of any one of the preceding claims,
wherein the light transmission portion (121) and the edge lighting portion (123) are connected in a diametrical direction,
wherein the light transmission portion (121) is arranged at a position covered by the second light diffusion guide (130) between the panel (50) and the second light diffusion guide (130), and
wherein at least a portion of the edge lighting portion (123) is arranged in a region not covered by the second light diffusion guide (130) between the panel (50) and the second light diffusion guide (130).

5. The home appliance of any one of the preceding claims,
wherein the second light diffusion guide (130) includes a first guide portion (131) and a second guide portion (135),
wherein, with respect to an axial direction, the first guide portion (131) is arranged between the first light diffusion guide (120) and the second guide portion (135), and
wherein at least a portion of the first guide portion (131) and the second guide portion (135) is arranged to face at least a portion of the first light diffusion guide (120) in the axial direction so as to receive light emitted from the first light diffusion guide (120).

6. The home appliance of claim 5, further comprising:
an inner member (132) arranged between an inner surface of the first guide portion (131) facing the light transmission portion (121) and the light transmission portion (121),
wherein the inner member (132) includes a light-shielding portion (132a) blocking light transmission between the light transmission portion (121) and the first guide portion (131), and a light-transmitting portion (132b) allowing light transmission between the light transmission portion (121) and the first guide portion (131), and
wherein light emitted from the light source (140) or the light transmission portion (121) passes through the light-transmitting portion (132b) to pass through the first guide portion (131).

7. The home appliance of claim 5 or 6,
wherein the knob (110) covers the second guide portion (135) and is coupled to the second light diffusion guide (130),
wherein a through-hole (114) is provided on a front surface of the knob (110), and
wherein a portion of the second guide portion (135) is exposed to an outside of the knob (110) through the through-hole (114) to implement lighting.

8. The home appliance of claims of claims 5 to 7,
wherein the knob (110) covers the second guide portion (135) and is coupled to the second light diffusion guide (130),
wherein at least a portion of the first guide portion implements lighting between the panel (50) and the knob (110),
wherein at least a portion of the second guide portion (135) is exposed to an outside of the knob (110) to implement lighting, and
wherein a position of lighting implemented by the first guide portion (131) and a position of lighting implemented by the second guide portion (135) are arranged to be spaced apart from each other in an axial direction.

9. The home appliance of any one of the preceding claims, further comprising:
a base member (150) installed on the panel (50),
wherein at least one of the light source (140) and the first light diffusion guide (120) is installed on the base member (150).

10. The home appliance of claim 9,
wherein the first light diffusion guide (120) is arranged between the base member (150) and the second light diffusion guide (130) and is coupled to the base member (150).

11. The home appliance of claim 9 or 10,
wherein a substrate (145) on which the light source (140) is mounted is arranged between the panel (50) and the base member (150) and is mounted to the base member (150), and
wherein the base member (150) comprises a base plate (151) arranged between the light source (140) and the light transmission portion (121), and a light through-hole (152) formed in the base plate (151) to form a passage connecting the light source (140) and the light transmission portion (121).

12. The home appliance of claim 11, further comprising:
a fastening member (160) coupling the base member (150) to the panel (50),
the base plate (151) forming a surface (111) facing the light transmission portion (121),
wherein the fastening member (160) comprises a body portion (161) penetrating the base plate (151) and the panel (50), and a head portion (163) connected to the body portion (161) to protrude outward from the base plate (151), and
wherein at least a portion of the head portion (163) is inserted into an interior of the light transmission portion (121) or passes through the light transmission portion (121) in an axial direction.

13. The home appliance of any one of claims 9 to 12,
wherein, in an axial direction, the light source (140) is arranged between the panel (50) and the first light diffusion guide (120), and the base member (150) is arranged between the light source (140) and the first light diffusion guide (120), and
wherein a substrate (145) on which the light source (140) is mounted and the first light diffusion guide (120) are mounted on the base member (150).

14. The home appliance of claim 13, further comprising:
an adjustment shaft (75) rotatably installed on an object to be adjusted,
wherein the adjustment shaft (75) passes axially through the panel (50), the base member (150), and the first light diffusion guide (120) to be coupled to the second light diffusion guide (130), and
wherein the base member (150) is coupled to the panel (50) and the object to be adjusted.

15. The home appliance according to claim 14, further comprising:
a first fastening member (160) coupling the base member (150) to the panel (50), and a second fastening member (165) coupling the base member (150) to the object to be adjusted,
wherein the first light diffusion guide (120) further includes a through-hole portion forming, in the first light diffusion guide (120), a passage for allowing at least one of the first fastening member (160) and the second fastening member (165) to pass in the axial direction.
